# EUROPÄISCHE PATENTANMELDUNG

(11) **EP 0 528 346 A1**
(43) Veröffentlichungstag der Anmeldung: **24.02.1993**
(21) Anmeldenummer: 92113730.3
(22) Anmeldetag: 12.08.1992
(51) Int. Cl.: C04B 35/56

(54) **Granulat auf Basis von Siliciumcarbidpulver und Siliciumcarbidkeramik**

(30) Priorität: 19.08.1991 DE 4127354
(71) Anmelder: Solvay Deutschland GmbH, D-30173 Hannover (DE)
(72) Erfinder: Gutierez, Antonio Miguel Hurtado, W-5100 Aachen (DE); Dose, Hans Rolf, W-5100 Aachen (DE); Alkan, Zeynel, W-5100 Aachen (DE); Habel, Wolfgang, W-4000 Düsseldorf 30 (DE); Nover, Christoph, W-3163 Sehnde 3 OT Höver (DE); Meyer, Hans, W-3050 Wunstorf (DE)
(74) Vertreter: Lauer, Dieter, Dr.

(57) **Zusammenfassung**

Es werden neue, bindemittelhaltige Siliciumcarbidgranulate für die Herstellung von insbesondere hochdichten Siliciumcarbid-Keramikprodukten sowie die aus den neuen Siliciumcarbidgranulat herstellbaren SiC-Keramikprodukte, insbesondere hochdichte drucklos gesinterte SiC-Hochleistungskeramiken, beschrieben.

## Beschreibung

Die Erfindung bezieht sich auf neue, bindemittelhaltige Siliciumcarbid-Granulate für die Herstellung von hochdichten Siliciumcarbid-Keramikprodukten sowie auf die unter Verwendung des neuen Siliciumcarbid-Granulates erhältlichen Siliciumcarbid-Keramikprodukte.

Aufgrund seiner chemischen und physikalischen Eigenschaften ist Siliciumcarbid ein ausgezeichneter Werkstoff für viele Industriezweige, beispielsweise für die Halbleiterindustrie, die Automobilindustrie, den Chemieanlagenbau, den Werkzeugmaschinenbau etc. Zu den Eigenschaften des Siliciumcarbids gehören hohe Oxidations- und Korrosionsbeständigkeit, hohe Wärmeleitfähigkeit bei hohen Temperaturen, ein niedriger Wärmeausdehnungskoeffizient, hohe Temperaturwechselfestigkeit, Hitzebeständigkeit, Härte und Abriebfestigkeit. Es eignet sich besonders zur Herstellung hochdichter Körper für viele technische Anwendungen, z.B. hochdichte Sinterkörper.

Zur Herstellung von Sinterkörpern sind verschiedene Verfahren bekannt. Das älteste Verfahren ist das Heißpressen, bei dem das SiC-Pulver mit geringen Mengen von sinterfördernden Additiven, z.B. Bor oder Aluminium, vermischt und in Graphitformen unter mechanischem Druck bei hohen Temperaturen bis etwa 2.000 °C unter Schutzgasatmosphäre gesintert wird. Ein weiteres Verfahren ist das Drucklossintern, bei dem ebenfalls unter Zusatz von Sinterhilfsmittel submikrones Siliciumcarbid-Pulver kalt verpreßt und anschließend bei Temperaturen bis 2.000 °C unter Vakuum oder in Schutzgasatmosphäre drucklos gesintert wird. Als drittes Verfahren ist das heißisostatische Pressen von SiC bekannt. Hierzu wird ein aus Siliciumcarbid kaltgeformter Körper unter Vakuum gasdicht in eine Hülle aus Kieselglas oder refraktärem Metall eingeschlossen und bei Temperaturen bis 2.000 °C unter hohem Gasdruck verdichtet. Es ist ferner auch möglich, drucklos gesintertes Siliciumcarbid heißisostatisch nachzuverdichten.

Das Sintern von Siliciumcarbid allein führt jedoch häufig zu Sinterkörpern mit hoher Porosität und einer Dichte weit unter der theoretischen Dichte des Siliciumcarbids (3,21 g/cm³). Solche porösen Siliciumcarbid-Sinterkörper sind insbesondere bei erhöhten Temperaturen erheblich oxidationsanfällig, und ihre mechanische Festigkeit ist gering. Im Stand der Technik wird daher die Herstellung von Siliciumcarbid-Sinterkörpern unter Zusatz von Sinterhilfsmitteln und/oder Bindemitteln ausgeführt, da hierdurch Sinterkörper mit besserer Dichte und besserer Oxidationsbeständigkeit erzielt werden können. Als Sinterhilfsmittel werden vielfach einige Prozent Aluminiumoxid, Metalloxide wie Thoriumoxid, Yttriumoxid, Lanthanoxid oder Ceroxid, Bor, metallisches Silicium, Wolframcarbid und dergleichen verwendet. Als Bindemittel werden im Stand der Technik beispielsweise organische Harze wie Phenol- oder Furfurylharze, organische Polymere wie z.B. Methylzellulose, Polyvinylalkohol, hochmolekulare Organo-Siliciumverbindungen, nämlich Organopolysiloxane, Organopolyborosiloxane und Polysilane verwendet. Die Verwendung oxidischer Sinterhilfsmittel bzw. der vorstehenden Bindertypen für die Herstellung von Hochleistungskeramiken aus Siliciumcarbid ist jedoch nachteilig, da nicht verhindert werden kann, daß oxidische und andere Verunreinigungen (z. B. Zersetzungsprodukte der Binder) in den gebildeten Sinterkörpern verbleiben; jedoch sind insbesondere oxidische Verunreinigungen in Hochleistungskeramiken auf Basis von SiC unerwünscht. Ferner werden auch bei Verwendung der genannten siliciumorganischen Verbindungen als Bindemittel lediglich Keramikprodukte erzielt, deren Biegebruchfestigkeit für Hochleistungskeramiken nicht ausreicht. Ebenso wie die Art des verwendeten Siliciumcarbid-Pulvers üben somit auch die zugesetzten Additive, wie insbesondere die Bindemittel, einen entscheidenden Einfluß auf das Keramikprodukt aus. Es besteht daher der Wunsch nach Siliciumcarbid-Granulaten mit definierter Zusammensetzung und definierten Eigenschaften, die die Herstellung hochreiner und hochdichter Hochleistungskeramiken aus Siliciumcarbid erlauben.

Erfindungsgemäß wurde nun gefunden, daß ein Granulat auf Basis von Siliciumcarbidpulver, welches im wesentlichen zusammengesetzt ist aus den homogen im Granulat verteilten Bestandteilen
(a) 67 bis 95 Gew.-% SiC-Pulver,
(b) 3 bis 30 Gew.-% eines Bindemittels auf Basis
   (b1) eines direkt synthetisierten Polycarbosilans oder Polycarbosilan-Gemisches und/oder
   (b2) eines direkt synthetisierten Polyborcarbosilans oder Polyborcarbosilan-Gemisches,
   wobei im Bindemittel wenigstens 20 Mol-% der Carbosilan-Substituenten Phenyl-Substituenten sind und mit im Falle von Polyborcarbosilan enthaltenden Bindemitteln der Anteil des Polyborcarbosilans so bemessen ist, daß der Gehalt an Bor im Granulat 0,1 bis 3,0 Gew.-%, vorzugsweise 0,2 bis 1,0 Gew.-% beträgt, und
(c) 0 bis 3,0 Gew.-% eines sauerstoffreien Sinterhilfsmittels,
hervorragend für die Herstellung von Hochleistungskeramiken auf Basis von Siliciumcarbid geeignet ist. Insbesondere im Falle von Bindemitteln mit nur Polycarbosilan gemäß (b1) sind bis zu 3,0 Gew.-% eines sauerstofffreien Sinterhilfsmittels enthalten. Zweckmäßig sind insbesondere Granulate, deren Granulatkörner einen Korndurchmesser kleiner 0,6 mm, vorzugsweise kleiner 0,3 mm besitzen. Vorteilhaft sind sie größer als 0,02 mm.

Die Erfindung bezieht sich damit auf ein einheitlich zusammengesetztes Siliciumcarbid-Granulat, welches ein spezielles Bindemittel auf Basis von ausgewählten Polycarbosilanen und/oder Polyborcarbosilanen, sowie gegebenenfalls ein Sinterhilfsmittel als Bestandteile enthält. Das im erfindungsgemäßen SiC-Granulat enthaltene SiC-Pulver kann ansich jedes Siliciumcarbid-Pulver sein, beispielsweise α-Siliciumcarbid oder β-Siliciumcarbid. Bevorzugt ist das kommerziell verfügbare, feinteilige α-Siliciumcarbid, welches insbesondere durch das Acheson-Verfahren herstellbar ist. Nach diesem Verfahren wird reiner Quarzsand (z.B. hochreines SiO₂ mit mehr als 99,8 % SiO₂) und aschearmer Koks (z.B. Petrolkoks, Retortenkohle und dergleichen) mit Zusätzen von Sägemehl und von Kochsalz als Gemisch im Elektrowiderstandsofen bei etwa 2.500 °C in Siliciumcarbid überführt. Die Reinheit des hierbei gebildeten Siliciumcarbids wird nach der Farbe beurteilt. Direkt an der Elektrode wird hellgrün gefärbtes Material mit einer Reinheit von 99,8 % gebildet. Bei 99,5 % ist die Farbe dunkelgrün, ab 99 % wird sie schwarz. Unterhalb 90 % SiC wird die Farbe grau. Das Siliciumcarbid nach dem Acheson-Verfahren fällt in großen Blöcken an, die über Brechen und Mahlen in an sich bekannter Weise zu Pulvern mit geeigneten Korngrößen zerkleinert werden. Im allgemeinen sind SiC-Pulver mit einer durchschnittlichen Partikelgröße von weniger als 5 µm, insbesondere aber von weniger als 1 µm, bis herab zu 200 nm und feiner, d. h. ultrafeines α-SiC bevorzugt.

Es können als SiC-Pulver in den Granulaten auch nach anderen Verfahren gewonnene SiC-Ausgangsstoffe enthalten sein. Beispielsweise wird im Stand der Technik Siliciumcarbid auch durch Synthese im Plasmabogen, durch kontinuierliche Schmelze im Induktionsofen, durch Reaktionen in inerter CO-Atmosphäre, durch Zersetzung von Polycarbosilanen und auch über CVD-Verfahren (CVD = Chemical Vapour Deposition) hergestellt. Bevorzugt ist im erfindungsgemäßen SiC-Granulat ultrafeines Siliciumcarbid-Pulver, insbesondere solches SiC-Pulver mit einer spezifischen Oberfläche von 10 bis 20 m²/g gemessen nach BET, enthalten; das Rüttelgewicht liegt bei 0,75 bis 1,0 g/cm³; der pH-Wert liegt bei 6 bis 7 (90 g SiC in 100 ml demineralisiertem H₂O aufgekocht; Messung nach Abkühlung auf Raumtemperatur). Die Verunreinigungen im Siliciumcarbid-Pulver sind sehr gering, beispielsweise liegt der Gehalt an freiem Kohlenstoff unter etwa 0,4 %, der Gehalt an freiem Silicium unter etwa 0,12 %, der Gehalt an Sauerstoff unter etwa 0,8 % und der Gehalt an Metallen wie Aluminium, Eisen, Titan, Natrium, Wolfram, Kobalt, Magnesium oder Calcium unter jeweils 0,05 % und die Summe der Metalle unter etwa 0,15 %.

Eine weitere Komponente des erfindungsgemäßen Granulates auf Basis von Siliciumcarbidpulver ist das Bindemittel auf Basis von Polycarbosilanen und/oder Polyborcarbosilanen. In den Polycarbosilanen bzw. den Polyborcarbosilanen des Bindemittels muß erfindungsgemäß ein Anteil von wenigstens 20 Mol-% der Carbosilan-Substituenten, in bevorzugten Ausgestaltungen der Erfindung wenigstens 50 Mol-%, noch besser wenigstens 65 Mol-%, insbesondere wenigstens 70 Mol-% der Carbosilan-Substituenten Phenylsubstituenten sein. Als Carbosilan-Substituenten werden hierbei nur die Si-Substituenten bzw. B-Substituenten der Polycarbo- bzw. Polyborcarbosilane des Bindemittels verstanden, die als einwertige Reste mit nur einem Si- bzw. B-Atom des Polycarbo- bzw. Polyborcarbosilans verknüpft sind, nicht jedoch die zweiwertigen, mit den Si- und B-Atomen das Polycarbo- bzw. Polyborcarbosilangerüst aufbauenden Gruppen. Carbosilan-Substituenten im Sinne der vorstehenden Definition sind daher z.B. die Reste Ph, R, R', R'', R¹, R², R³ und Me, die weiter unten im Zusammenhang mit bevorzugten Ausgestaltungen der Erfindung für die Polycarbosilane bzw. Polyborcarbosilane des Bindemittels näher beschrieben sind; die kettenbildenden zweiwertigen Gruppen A, die mit den Silicium- und/oder Boratomen das Polycarbo- bzw. Polyborcarbosilangerüst aufbauen, werden als Gerüstgruppen des Polycarbo- bzw. Polyborcarbosilans aufgefaßt und gehören nicht zu den Carbosilan-Substituenten im Sinne der vorstehenden Definition, d.h. sie werden nicht zu den Si- bzw. B-Substituenten gerechnet.

In einer ersten Variante (b1) der Erfindung ist das Bindemittel ein direkt synthetisiertes Polycarbosilan oder ein Gemisch solcher Polycarbosilane, wobei im Polycarbosilan oder im Polycarbosilan-Gemisch wenigstens 20 Mol-% der Si-Substituenten Phenylsubstituenten sind. Diese Polycarbosilane des Bindemittels sind Polymere mit einer Gerüststruktur aus den Elementen Kohlenstoff und Silicium, in welcher kettenbildende Si-Gruppen und Kohlenwasserstoffgruppen alternierend oder in statistischer Verteilung vorliegen können. In einem bevorzugten Granulat besitzen die Polycarbosilane des Bindemittels im wesentlichen ein Gerüst aus den Struktureinheiten der Formeln -A- (A) und -Si(R¹) (R²)- (B). R¹ und/oder R² bedeuten Wasserstoff, Alkyl, Cycloalkyl und/oder Phenyl, A steht für einen Alkylenrest mit 1 bis 6 C-Atomen, insbesondere Methylen, wobei die Struktureinheiten der Formeln (A) und (B) im Verhältnis von etwa 1:1 im Polycarbosilan vorliegen.

Die Gerüststruktur alternierend aufgebauter Polycarbosilane ist im wesentlichen kettenförmig bzw. linear und besteht z.B. aus wiederkehrenden Struktureinheiten der Formeln 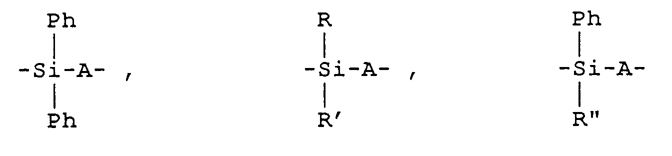
oder einer Kombination derselben. Als Bindemittel eignen sich auch Polycarbosilane mit statistischer Verteilung der Gruppen (A) und (B). In solchen Polycarbosilanen liegen die Gruppen (A) und (B) ebenfalls im Verhältnis von etwa 1:1 vor. Aufgrund der statistischen Verteilung weist die Polycarbosilankette ein Gerüst auf, in welchem Blöcke aus zwei oder mehr Struktureinheiten -A-, aus zwei oder mehr Struktureinheiten -Si(R¹R²)- sowie auch aus Struktureinheiten -A-Si(R¹R²)- vorliegen können. Solche Polycarbosilane können bei der Direktsynthese erhalten werden. Der Anteil von Struktureinheiten mit Phenylsubstituenten ist so bemessen, daß die Maßgabe hinsichtlich der Mindestmolmenge von 20 % an Phenylsubstituenten in den Bindemittel-Polycarbosilanen erfüllt ist. In den vorstehenden Struktureinheiten steht der Si-Substituent Ph für Phenyl und die Si-Substituenten R¹, R², R, R' und R'' stehen unabhängig voneinander in der Bedeutung Wasserstoff, Alkyl oder Cycloalkyl. Alkyl besitzt hierbei die Bedeutung eines gesättigten oder ungesättigten, geradkettigen oder verzweigten Alkylrestes, insbesondere eines Alkylrestes mit 1 bis 6 C-Atomen. Bevorzugte Alkylreste sind insbesondere Niederalkylreste mit 1 bis 4 C-Atomen. Beispiele für Alkyl sind Methyl, Ethyl, Propyl, Butyl, Pentyl, Hexyl, Octyl, Dodecyl, Hexadecyl, Isopropyl, Isobutyl, Tertiärbutyl oder Allyl. Cycloalkyl besitzt hierbei die Bedeutung eines gesättigten oder ungesättigten Cycloalkylrestes, insbesondere eines C5- oder C6-Cycloalkylrestes wie Cyclopentyl, Cyclohexyl oder Cyclopentenyl, Cyclohexenyl. In sehr bevorzugten Ausgestaltungen der Erfindung stehen die Si-Substituenten R, R' und R'' jedoch für den Niederalkylrest Methyl. In den obenstehenden Struktureinheiten der Polycarbosilane steht die Gruppe A, die mit den Siliciumatomen das Polycarbosilangerüst bildet, für einen geradkettigen oder verzweigten Alkylenrest mit 1 bis 6 C-Atomen. Zweckmäßig sind insbesondere Niederalkylenreste mit 1 bis 4 C-Atomen, wie z.B. Methylen, Ethylen, Trimethylen, Isobutylen. In bevorzugten Ausgestaltungen der Erfindung steht die kettenbildende Gruppe A für den Niederalkylenrest Methylen.

Die direkt synthetisierten Polycarbosilane des Bindemittels sind solche, die durch Cokondensation von wenigstens einem Dihalogensilan und wenigsten einem Dihalogenkohlenwasserstoff in Gegenwart eines Alkalimetalles nach dem Verfahren der DE 38 41 348 hergestellt werden können. Hierzu werden Dihalogensilane R¹R²SiX₂, Ph₂SiX₂, RR'SiX₂, PhR''SiX₂ (worin R¹, R², Ph, R, R' und R'' die obenangegebene Bedeutung besitzen und X für Halogen, vorzugsweise für Chlor oder Brom steht) oder deren Gemische in Mengen, die die obigen Voraussetzungen hinsichtlich des Anteils der Si-Phenylsubstituenten erfüllen, mit wenigstens einem Dihalogenkohlenwasserstoff der Formel Y-A-Y (worin A die obenangegebene Bedeutung besitzt und Y für die Halogene Chlor, Brom oder Jod, vorzugsweise für Chlor oder Brom, steht) in Gegenwart eines Alkalimetalles in einem inerten organischen flüssigen Medium miteinander umgesetzt. Die Reaktion wird im allgemeinen so geführt, daß zunächst eine Suspension des Alkalimetalles in einem geeigneten Lösungsmittel, beispielsweise in einem Kohlenwasserstoff wie Toluol, Xylol oder Dekalin, erzeugt wird. Anschließend werden in die Alkalimetallsuspension die übrigen Reaktanden (Dihalogensilane, Dihalogenkohlenwasserstoffe) eingebracht. Nach erfolgter Umsetzung kann man das Polycarbosilan durch jede geeignete Methode aus dem Reaktionsgemisch gewinnen. Ist das Polycarbosilan beispielsweise im Lösungsmittel löslich, so lassen sich die sonstigen unlöslichen Komponenten durch Filtration abtrennen. Das im Lösungsmittel zurückbleibende Polycarbosilan kann dann durch Waschen mit Wasser gereinigt und durch Entzug des Lösungsmittels zu einem Pulver getrocknet werden. Sind die gebildeten Polycarbosilane im Lösungsmittel aber unlöslich, so können sie durch ein geeignetes anderes Lösungsmittel extrahiert werden, anschließend durch Waschen mit Wasser gereinigt und durch Entzug des Lösungsmittels zu einem Pulver getrocknet werden.

In vorteilhaften Ausgestaltungen der Erfindung besitzen die Polycarbosilane des Bindemittels im wesentlichen ein Gerüst aus der Struktureinheit I und II, aus einer Kombination der Struktureinheit I und II mit III und/oder mit IV, aus einer Kombination der Struktureinheit I und III mit IV oder aus einer Kombination der Struktureinheit I und IV, 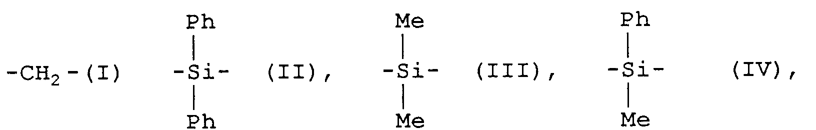
worin der Si-Substituent Ph für Phenyl und der Si-Substituent Me für Methyl steht. Diese bevorzugten Polycarbosilane können alternierend aus Struktureinheiten der Formeln (I) und (II), bzw. (III) oder (IV) aufgebaut sein. Sie können dann beispielsweise Ketten aus -Si(Ph)₂-CH₂-, -Si(Me)₂-CH₂- oder -Si(Ph)(Me)-CH₂- umfassen.

Sie können auch eine statistische Verteilung der Formeln (I) und (II) bzw. (III) oder (IV) aufweisen. Sie enthalten dann Blöcke aus zwei oder mehr -CH₂-Gruppen, zwei oder mehr -Si(Ph)₂-Gruppen, zwei oder mehr -Si(Me)₂-Gruppen bzw. zwei oder mehr -Si(Ph)(Me)-Gruppen. Darüberhinaus können in solchen Polycarbosilanen auch Einheiten mit alternierenden Si-C-Ketten vorhanden sein, z.B. -Si(Ph)₂-CH₂-Gruppen, -Si(Me)₂-CH₂-Gruppen bzw. -Si(Ph)(Me)-CH₂-Gruppen. Bevorzugt sind Bindemittel, deren Polycarbosilane im wesentlichen ein Gerüst aus der Struktureinheit I und II oder aus einer Kombination der Struktureinheit I mit II und III besitzen. Besonders bevorzugte Polycarbosilane sind Polydiphenylcarbosilan, insbesondere mit Molgewichten von 700 bis 1100 g/mol, vorzugsweise von 800 bis 1000 g/mol (Zahlenmittel), und Poly(diphenyl-co-dimethyl)carbosilan, insbesondere mit Molgewichten von 800 bis 1300 g/mol, vorzugsweise 900 bis 1200 g/mol (Zahlenmittel).

In einer zweiten Variante (b2) der Erfindung enthält das Bindemittel nur direkt synthetisiertes Polyborcarbosilan oder ein Gemisch solcher Polyborcarbosilane und in einer dritten Variante (b1+b2) der Erfindung enthält das Bindemittel sowohl Polycarbosilan als auch Polyborcarbosilan. Der Gehalt an Polyborcarbosilan im Bindemittel ist in diesen beiden Varianten der Erfindung so bemessen, daß das Granulat die weiter oben angegebenen Borgehalte von 0,1 bis 3,0 Gew.-%, vorteilhaft von 0,2 bis 1,0 Gew.-% aufweisen kann. In besonders bevorzugten Granulaten dieser Variante der Erfindung ist das Polyborcarbosilan im Bindemittel in einer solchen Menge enthalten, die einem Borgehalt von 0,3 bis 0,6 Gew.-% im Granulat entspricht. Die in diesen Varianten (b2) bzw. (b1+b2) der Erfindung im Bindemittel enthaltenen Polyborcarbosilane sind Polymere mit einer Gerüststruktur aus den Elementen Kohlenstoff, Silicium und Bor, wobei im Gerüst die Si-Gruppen und Kohlenwasserstoffgruppen ebenso wie bei den obigen Polycarbosilanen alternierend oder in statistischer Verteilung vorliegen, aber darüber hinaus ein Teil der Si-Atome im Carbosilangerüst durch B-Atome ersetzt ist. Die Gerüststruktur der Polyborcarbosilane besteht somit insbesondere aus wiederkehrenden Struktureinheiten der Formeln 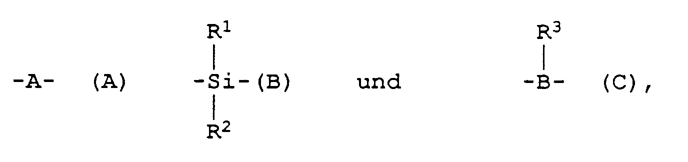
worin R¹ und/oder R² für Wasserstoff, Alkyl, Cycloalkyl oder Phenyl stehen (Alkyl bzw. Cycloalkyl wie oben bereits definiert), R³ für einen Niederalkylrest mit 1 bis 4 C-Atomen (Niederalkyl wie oben bereits definiert) oder einen Phenylrest Ph steht und die Gerüstgruppe A die Bedeutungen des oben bereits für die Polycarbosilangerüste definierten Alkylenrestes A besitzt. Das Molverhältnis der Einheiten (A):(B)+(C) beträgt etwa 1:1. Sowohl bei den Si-Substituenten als auch bei den B-Substituenten des Polyborcarbosilans ist der Phenylsubstituent Ph bevorzugt. Der Alkylenrest A im Polyborcarbosilan ist vorzugsweise der Niederalkylenrest Methylen. Sehr bevorzugte Polyborcarbosilane sind daher solche, in denen jeder der Substituenten R¹, R² und R³ für den Phenylrest Ph steht und der Alkylenrest A Methylen bedeutet, und die als Poly(phenyl-co-diphenyl)borcarbosilane bezeichnet werden. Die Poly(phenyl-co-diphenyl)borcarbosilane besitzen insbesondere Molgewichte von 500 bis 1000 g/mol (Zahlenmittel).

In Polycarbosilanen mit statistischer Verteilung liegen Blöcke aus 2 oder mehr Einheiten der Formel (A), (B) bzw. (C) vor. Daneben finden sich auch Struktureinheiten der Formel (V) und (VI) 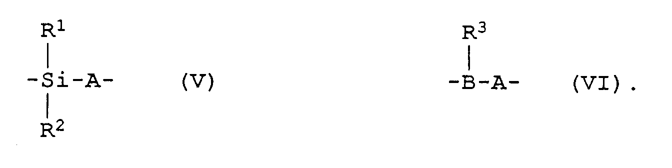
Alternierend aufgebaute Polycarbosilane umfassen Struktureinheiten der Formel (V) und (VI).

In den vorstehenden Ausgestaltungen der Erfindung gilt auch für die Varianten (b2) und (b1+b2) die Maßgabe, daß wenigstens 20 Mol-%, vorzugsweise 50 Mol-% und in besonders vorteilhaften Ausgestaltungen wenigstens 65 Mol-%, insbesondere wenigstens 70 Mol-% der Carbosilan-Substituenten (hier bezogen auf Summe aus Si-Substituenten und B-Substituenten) im Bindemittel Phenylsubstituenten sind. Weiterhin kann das Molverhältnis der Struktureinheiten (B) und (C) bzw. V und VI in den Polyborcarbosilanen in einem weiten Bereich derart variieren, daß der steil der Bor-Struktureinheit der Formel (C) bzw. VI im Polyborcarbosilan von geringen Molanteilen, z.B. 0,1 Mol-% bishin zu 50 Mol-% beträgt. Bevorzugte Polyborcarbosilane für das Bindemittel zeichnen sich dadurch aus, daß die Struktureinheiten der Formeln (B) und (C) bzw. (V) und (VI) im Molverhältnis von 99:1 bis 1:1, insbesondere im Molverhältnis von 19:1 bis 1:1, im Polyborcarbosilan vorliegen.

Die Polyborcarbosilane können analog der oben beschriebenen Herstellung der direkt synthetisierten Polycarbosilane, d.h. analog dem Verfahren der DE 38 41 348, gewonnen werden. Hierzu werden wenigstens ein Dihalogensilan R¹R²SiX₂ (R¹, R² und X mit der oben angegebenen Bedeutung), wenigstens ein Dihalogenkohlenwasserstoff der Formel Y-A-Y (A und Y mit der oben angegebenen Bedeutung) und wenigstens ein Bordihalogenid R³BZ₂ (worin R³ die obige Bedeutung besitzt und Z für die Halogene Chlor, Brom oder Jod, vorzugsweise für Chlor oder Brom steht) in Gegenwart eines Alkalimetalles in einem inerten organischen flüssigen Medium in einer Cokondensationsreaktion miteinander umgesetzt. Die Menge der eingesetzten Dihalogensilane und der eingesetzten Borverbindung einerseits und die Menge der eingesetzten Dihalogenkohlenwasserstoffe andererseits wird bevorzugt so bemessen, daß insgesamt ein Molverhältnis der Summe aus Dihalogensilanen und Borverbindung einerseits zu den Dihalogenkohlenwasserstoffen andererseits von etwa 1:1 vorliegt. Das Molverhältnis der drei Reaktanden Dihalogensilan, Borverbindung und Dihalogenkohlenwasserstoff beträgt somit etwa (2-n):n:2, wobei n die eingesetzte Molmenge der Borverbindung ist und einen Wert von bis zu 1 annehmen kann; Werte von n=0,1 bis n=1 sind bevorzugt. Ein Verhältnis von einerseits der Summe aus Dihalogensilan und Borverbindung zu andererseits dem Dihalogenkohlenwasserstoff mit Werten von etwa 1:1 ist zwar bevorzugt, es sind aber auch Abweichungen von bis zu 20 % möglich. Die Reaktionsbedingungen und die Reaktionsführung zur Herstellung der Polyborcarbosilane können direkt an das Verfahren der DE 38 41 348 zur Herstellung von direkt synthetisierten Polycarbosilanen angelehnt werden. Zusätzliche Einzelheiten zur Herstellung von Polyborcarbosilanen können aber gewünschtenfalls auch der parallel anhängigen deutschen Patentanmeldung 41 02 315 entnommen werden.

In den Ausgestaltungen der Erfindung, in denen das Granulat auf Basis von Siliciumcarbidpulver ein Bindemittel mit Polyborcarbosilan gemäß (b2) oder (b1+b2) enthält, muß im Hinblick auf die Verwendungszwecke des Granulates kein zusätzliches Sinterhilfsmittel im Granulat enthalten sein; andererseits können aber auch Granulate, die ein Polyborcarbosilan im Bindemittel gemäß (b2) oder (b1+b2) enthalten fakultativ zusätzlich Sinterhilfsmittel enthalten. Zweckmäßige Sinterhilfsmittel-freie Granulate zeichnen sich durch eine Zusammensetzung von
(a) 70 bis 95 Gew.-%, vorzugsweise 80 bis 90 Gew.-% SiC-Pulver und
(b) 5 bis 30 Gew.-%, vorzugsweise 10 bis 20 Gew.-% des Bindemittels auf Basis von Polyborcarbosilan gemäß (b2) oder von Gemischen aus Polycarbosilan gemäß (b1) und Polyborcarbosilan gemäß (b2) aus. Ein bevorzugt in diesen Granulaten enthaltenes Polyborcarbosilan ist das oben bereits beschriebene Poly(phenyl-co-diphenyl)borcarbosilan.

Liegen in den erfindungsgemäßen Granulaten jedoch Bindemittel gemäß (b1) vor, die kein Polyborcarbosilan enthalten, so enthalten die Granulate dann vorteilhafter Weise eine wirksame Menge, beispielsweise wenigstens 0,1 Gew.-%, eines Sauerstoff-freien Sinterhilfsmittels in einer maximalen Menge wie weiter oben unter (c) angegeben. Besonders bevorzugte, Sinterhilfsmittel enthaltende Granulate besitzen eine Zusammensetzung von
(a) 69,0 bis 94,9 Gew.-%, vorzugweise
   79,2 bis 89,6 Gew.-% SiC-Pulver,
(b) 5 bis 30 Gew.-%, vorzugsweise
   10 bis 20 Gew.-% des Bindemittels auf Basis von Polycarbosilan gemäß (b1) und
(c) 0.1 bis 1,0 Gew.-%, vorzugweise
   0,4 bis 0,8 Gew.-% des Sinterhilfsmittels.

Geeignete Sinterhilfsmittel sind z.B. die bekannten Metallcarbide wie Fe₃C, MgC₃, Li₂C₂, Be₂C, Borcarbid; Kohlenstoff; Metalle wie Aluminium, Bor; Bor- bzw. Aluminium-enthaltende Verbindungen. Beispiele für Borverbindungen sind Borhydrid, Trivinylbor, Triphenylbor. Beispiele für Aluminium-Verbindungen sind Aluminiumnitrid, Aluminiumdiborid. Es können auch Gemische der Sinterhilfsmittel eingesetzt werden. Es können auch andere analoge metallhaltige Sinterhilfsmittel in den Granulaten der Erfindung enthalten sein, Sauerstoff-haltige bzw. oxidische Sinterhilfsmittel kommen jedoch im Rahmen der vorliegenden Erfindung nicht zum Einsatz. Bevorzugte Sinterhilfsmittel sind ausgewählt aus der Gruppe Kohlenstoff, Bor, Aluminium und Borcarbid, insbesondere aus der Gruppe Bor und Borcarbid.

Die Granulate auf Basis von Siliciumcarbidpulver gemäß der Erfindung können in einfacher Weise hergestellt werden, indem man die Granulatbestandteile (a) SiC-Pulver, (b) Polycarbosilan-Bindemittel und gegebenenfalls (c) Sinterhilfsmittel in einem organischen Lösungsmittel, vorzugsweise in Chloroform, Toluol oder Xylol, gegebenenfalls unter Zusatz von Dispergierhilfsmittel mischt, das erhaltene Gemisch homogenisiert und abschließend das Lösungsmittel unter Bildung des Granulates durch Abdampfen und gleichzeitiger Abrollbewegung oder durch Sprühtrocknung entfernt. Zur Herstellung des Granulates wird zunächst ein Schlicker mit z.B. bis zu 40 Gew.-% und mehr, bis hin zu 70 Gew.-% Feststoffgehalt hergestellt. Hierzu wird das Bindemittel in dem organischen Lösungsmittel gelöst und anschließend das Siliciumcarbid-Pulver und ggf. das Sinterhilfsmittel in der Bindemittel-Lösung dispergiert. Das Dispergieren kann durch an sich bekannte Dispergierhilfmittel gewünschtenfalls unterstützt werden. Geeignete Dispergierhilfsmittel sind z.B. solche auf Basis von alkalifreien Ethylenoxidaddukten, die sich besonders für Sonderkeramik-Partikel wie z.B. SiC-Partikel, die in wasserfreien Systemen dispergiert werden, eignen. Die optimale Zusatzmenge im Bereich von 0,5 bis 2,5 Gew.-% (bezogen auf die Gesamtzusammensetzung) kann der Fachmann leicht durch einige wenige Vergleichsversuche ermitteln. Weitere geeignete Dispergierhilfsmittel sind polymere Dispergierhilfsmittel mit Ankergruppen, die von der Oberfläche der Keramikpartikel adsorbiert werden können, und mit einer organischen Polymerkette mit relativ hohem Molekulargewicht; durch Variation der chemischen Struktur der Polymerkette steht im Stand der Technik eine Palette dieses Typs polymerer Dispergiermittel (z.B. polymere Dispergiermittel der Fa. ICI unter der Bezeichnung "Hypermer") zur Verfügung, die es dem Fachmann in einfacher Weise ermöglicht, für die SiC-Granulat-Herstellung ein auf die Polarität des verwendeten Lösungsmittels abgestimmtes Dispergiermittel auszuwählen. Die nach dem Dispergieren folgende Homogenisierung des Schlickers kann in an sich bekannter Weise, z.B. durch die auf dem Gebiet der Naßmahlung üblichen Verfahren, bewirkt werden. Zur Homogenisierung können z.B. Homogenisatioren mit schnell laufenden Rotoren, Kugelmühlen, Rührwerksmühlen oder Kolloidmühlen verwendet werden; bevorzugt werden Kugelmühlen eingesetzt. Der Schlicker wird der Homogenisierung im allgemeinen über einen Zeitraum von bis zu 24 h, vorzugsweise 2 bis 24 h, unterworfen. Abschließend wird das Lösungsmittel unter Bildung des Granulates entfernt. Hierzu kann das Lösungsmittel z.B. im Rotationsverdampfer unter normalem bzw. unter vermindertem Druck abdestilliert werden. Wird die Granulatherstellung im Rotationsverdampfer ausgeführt, so ist es zweckmäßig, das Lösungsmittel bei Temperaturen von etwa 20 °C und bei vermindertem Druck abzudestilieren. Bevorzugt werden Temperatur und Druck so reguliert, daß kein bzw. allenfalls ein leichtes Sieden des Lösungsmittels stattfindet. Der im Rotationsverdampfer zurückbleibende Rückstand wird anschließend mit Granulationssieben auf den gewünschten Korndurchmesser, z.B. einen Korndurchmesser von < 0,6 mm, vorzugsweise < 0,3 mm eingestellt. In einer weiteren, bevorzugten Variante der Erfindung wird der Schlicker durch Sprühtrocknung in das Granulat überführt. Die Sprühtrocknung kann hierbei in konventionellen Sprühtrocknern erfolgen. Die Trocknungsbedingungen werden insbesondere so eingestellt, daß die Eintrittstemperatur der Trockenluft etwa 75 bis 90 °C und die Austrittstemperatur etwa 45 bis 60 °C beträgt. Der Durchsatz (Sprühflow) wird insbesondere im Bereich von 400 bis 800 Nl/h eingestellt. Es werden SiC-Granulate erhalten, deren Restfeuchtigkeit nach der Sprühtrocknung unter 2 Gew.-% liegt.

Gemäß einer anderen, bevorzugten Variante erzeugt man das Granulat nach der Methode der Aufbaugranulation. Bei diesem Verfahren wird SiC-Pulver vorgelegt und das in einem Lösungsmittel, z.B. Chloroform, Toluol oder Xylol gelöste Polycarbosilan bzw. Polyborcarbosilan aufgesprüht. Die erhaltene Zubereitung wird dann, z.B. auf einem Rollteller, zu Granulat der gewünschten Größe gerollt und das Lösungsmittel entfernt.

Eine weitere Methode, die sehr gut anwendbar ist, betrifft die Trocknung in der Wirbelschicht. Dabei verfährt man vorzugsweise derart, daß man eine geringe Menge Granulat als Keimbildner vorlegt und eine Dispersion, umfassend SiC-Pulver, Polycarbosilan, gegebenenfalls Sinterhilfsmittel und Lösungsmittel bzw. Dispergiermittel, auf das in der Wirbelschicht gehaltene Granulat aufsprüht. Die Trocknungsbedingungen entsprechen denen der Sprühtrocknung.

Die nach den vorstehenden Verfahren erhaltenen Siliciumcarbid-Granulate sind direkt für die weitere Verwendung geeignet. Die erfindungsgemäßen Siliciumcarbid-Granulate eignen sich z.B. hervorragend für viele Anwendungen auf dem Gebiet der Hochleistungskeramik, z.B. als Material für die Herstellung von Keramikformkörpern, für Beschichtungen, für Verbundwerkstoffe oder als Fügemittel (Klebemittel), d.h. zum Verbinden (Fügen) von Keramikformkörpern insbesondere aus Siliciumcarbid. Das erfindungsgemäße Granulat eignet sich bspw. auch als spritzgußfähiges Siliciumcarbid-Granulat zur Herstellung von keramischen Formkörpern durch Spritzgußverfahren. Besonders gut ist das erfindungsgemäße Siliciumcarbid-Granulat als pressfertiges SiC-Granulat zur Herstellung von drucklos gesinterten Monolithen, insbesondere auf dem Gebiet der drucklos gesinterten Hochleistungskeramiken, geeignet. Diese drucklos gesinterten Siliciumcarbid-Keramiken stellen ebenfalls einen Erfindungsgegenstand dar. Sie zeichnen sich insbesondere durch die Gefügestruktur aus, die eine globulare Struktur mit einer Porositätsrate von 0 bis 2 % und einem d_{arith.} = 5 bis 10 µm ist. In einer anderen Variante der erfindungsgemäßen, drucklos gesinterten Siliciumcarbid-Keramiken besitzen diese eine Vierpunkt-Biegebruchfestigkeit von wenigstens 420 MPa und ein Weibull-Modul von wenigstens 6, vorzugsweise von wenigstens 10. In einer weiteren Variante der erfindungsgemäßen drucklos gesinterten Siliciumcarbid-Keramiken besitzen diese eine Vierpunkt-Biegebruchfestigkeit von wenigstens 350 MPa und ein Weibull-Modul von wenigstens 10, vorzugsweise von wenigstens 14. Von den beiden vorstehenden erfindungsgemäßen SiC-Keramikvarianten, die sich durch besondere Vierpunkt-Biegebruchfestigkeit und besonderes Weibull-Modul auszeichnen, sind insbesondere solche Ausgestaltungen bevorzugt, die zusätzlich die oben angegebene Gefügestruktur aufweisen. Besonders bevorzugte Ausgestaltungen der vorstehenden Varianten der drucklos gesinterten Siliciumcarbid-Keramiken zeichnen sich weiterhin durch einen K_{Ic}-Faktor (= Bruchzähigkeitsfaktor) von wenigstens 3,2 MPam^{1/2}, vorzugsweise einen K_{Ic}-Faktor von wenigstens 4,2 MPam^{1/2} aus.

Die vorstehenden drucklos gesinterten Keramiken können aus dem oben beschriebenen, erfindungsgemäßen Siliciumcarbid-Granulat in einfacher Weise nach an sich im Stand der Technik bekannten Verfahren hergestellt werden. Die vorteilhaften Eigenschaften der erfindungsgemäßen Siliciumcarbid-Granulate ermöglichen hierbei die Herstellung bisher im Stand der Technik nicht bekannter, drucklos gesinterter Siliciumcarbid-Keramiken, wobei diese neuen Siliciumcarbid-Keramiken sich jeweils durch die vorstehend angegebenen Charakteristika auszeichnen und insbesondere hochdichte Keramiken mit hohen Festigkeiten sind.

Zur Herstellung der drucklos gesinterten Siliciumcarbid-Keramiken der Erfindung wird zunächst ein Grünkörper aus dem erfindungsgemäßen Siliciumcarbid-Granulat hergestellt. Die Grünkörperherstellung, bei der das SiC-Granulat bereits in eine gewünschte Form überführt wird, erfolgt unter Druck, z.B. bei Drucken bis etwa 300 MPa. Hierzu eignen sich sowohl Warmpressverfahren als auch Kaltpressverfahren. Die angewendeten Temperaturen liegen beim bevorzugten Kaltpressverfahren üblicherweise bei Temperaturen von Raumtemperatur bis max. etwa 70 °C. Beim Warmpressen wird das Siliciumcarbid-Granulat unter Druck und bei einer Temperatur bis etwa 500 °C in die gewünschte Form überführt. Die hergestellten Grünkörper weisen eine ausreichende Festigkeit auf, so daß sie auch vor dem Sintern noch weiteren Bearbeitungsschritten oder Formgebungen unterworfen werden können. Bei Umgebungstemperatur feste oder harte Polycarbosilane können geformt werden, indem sie in kaltem Zustand in einer heißen Maschine oder Form verarbeitet werden. Alternativ kann man sie auf eine Temperatur erhitzen, bei welcher sie formbar sind, und in einer kalten oder heißen Maschine oder Form verarbeiten. Derartige Polycarbosilane verfestigen sich beim Erkalten wieder und sind deshalb sehr formstabil.

Polycarbosilane, die bei Umgebungstemperatur bereits formbar sind, können bei Umgebungstemperatur verarbeitet werden.

Die Formgebung der Grünkörper kann durch an sich im Stand der Technik bekannte Methoden ausgeführt werden, z.B. durch Formpressen, uniaxiales Pressen, Isopressen, Extrusion, Spritzguß etc. Die geformten Grünkörper können gewünschtenfalls einer weiteren Formgebung unterworfen werden. Durch eine darauf folgende Behandlung bei erhöhten Temperaturen werden die Grünkörper pyrolysiert und dann durch eine zweite Behandlung bei erhöhten Temperaturen durch druckloses Sintern in die erfindungsgemäße Siliciumcarbid-Keramik überführt. Das drucklose Sintern wird insbesondere bei Temperaturen zwischen 2000 °C bis etwa 2100 °C ausgeführt. Die Dichten der hergestellten, drucklos gesinterten Siliciumcarbid-Keramiken erreichen Werte, die sehr nahe bei der theoretischen Dichte (TD) von Siliciumcarbid liegen. Insbesondere werden Dichten erzielt, die oberhalb von 90 %, insbesondere oberhalb von 95 % der theoretischen Dichte des Siliciumcarbides liegen. Besonders geeignet zur Herstellung der erfindungsgemäßen Keramiken sind die oben beschriebenen SiC-Granulate, die durch ein Sprühtrocknungsverfahren hergestellt wurden.

Durch die Erfindung werden neue, vorteilhafte Siliciumcarbid-Granulate bereitgestellt, die ein ideales Ausgangsprodukt für die Herstellung von Keramik-Produkten auf Basis von Siliciumcarbid darstellen. Insbesondere durch das im erfindungsgemäßen SiC-Granulat verwendete Bindemittel kann sichergestellt werden, daß gewünschtenfalls SiC-Keramiken mit hohem Anteil an α-SiC, z.B. mit etwa 70 Gew.-% und mehr, zugänglich werden, da bei der pyrolytischen Umwandlung des Bindemittels in Siliciumcarbid kaum β-SiC gebildet wird. Durch die Bereitstellung des erfindungsgemäßen Siliciumcarbid-Granulates wird erstmals auch die Herstellung von neuen drucklos gesinterten Siliciumcarbid-Keramiken möglich, die in ihren Eigenschaften die bisher im Stand der Technik zugänglichen drucklos gesinterten Siliciumcarbid-Keramiken übertreffen.

Die nachfolgenden Beispiele sollen die Erfindung weiter erläutern, ohne sie jedoch in ihrem Umfang zu beschränken.

In den Beispielen wurden Siliciumcarbid und Bindemittel mit den folgenden Eigenschaften eingesetzt.
- α-SiC:: Herstellung nach dem Acheson-Verfahren; ultrafein, hochrein mit einer spezifischen Oberfläche (BET) von 15 ± 1 m²/g; mit einer Korngrößen-Verteilung von 90 Gew.-% < 1,8 µm und 50 Gew.-% < 0,7 µm (Sedigraph) bzw. 90 Gew.-% < 1,7 µm, 50 Gew.-% < 0,8 µm und 20 Gew.-% < 0,5 µm (Mikrotrack/Laser); mit einem Rüttelgewicht von 0,75 bis 1,0 g/cm³; pH-Wert 6 bis 7 (Aufkochen von 90 g SiC in 100 ml demineralisiertem Wasser; Messung nach dem Abkühlen auf Raumtemperatur).

### Bindemittel (jeweils unter Verwendung von Natrium hergestellt):

- direkt synthetisiertes Polydiphenylcarbosilan (aus Diphenyldichlorsilan und Methylenbromid, 1:1, in Xylol); Molgewicht etwa 860 ± 60 g/Mol (Zahlenmittel); die Elementaranalyse betrug in etwa 79,61 % C, 6,14 % H und 14,2 % Si.
- direkt synthetisiertes Poly(diphenyl-co-dimethyl)carbosilan (aus Diphenyldichlorsilan, Dimethyldichlorsilan und Methylenbromid im Molverhältnis 1:1:2 in Xylol); Molekulargewicht etwa 1080 ± 90 g/Mol (Zahlenmittel); die Elementaranalyse betrug in etwa 71,2 % C, 7,09 % H und 21,12 % Si.
- direkt synthetisiertes Poly(phenyl-co-diphenyl)borcarbosilan (aus Diphenyldichorsilan, Phenylbordichlorid und Methylenbromid im Molverhältnis 1:1:2 in Xylol); schwarz-braunes hochviskoses Produkt; die Elementaranalyse betrug in etwa 10 % Si, 75,9 % C, 6,2 % H und 2,5 % B; Molgewicht von etwa 648 g/Mol.
- direkt synthetisiertes Poly(diphenyl-co-dimethyl)carbosilan
   (aus Diphenyldichlorsilan, Dimethyldichlorsilan und Methylenbromid im Molverhältnis 4:1:5 in Xylol); Molekulargewicht etwa 880 ± 70 g/Mol (Zahlenmittel); die Elementaranalyse betrug in etwa 76,4 % C, 15,2 % Si und 6,6 % H.

### Beispiel 1

### A. Siliciumcarbid-Granulat

Schlickerzusammensetzung (bezogen auf die Trockenmasse):

| | | |
|---|---|---|
| - Siliciumcarbid | ultrafeines α-SiC (15 m²/g) | 79,4 Gew.-% |
| - Bindemittel | Polydiphenylcarbosilan | 15,0 Gew.-% |
| | Poly(diphenyl-co-dimethyl)carbosilan 1:1:2 | |
| | | 5,0 Gew.-% |
| - Sinterhilfsmittel | Bor (elementar) | 0,6 Gew.-% |

### Schlickervorbereitung:

- Lösen des Binders in Chloroform
- Dispergieren des SiC-Pulvers und der Sinterhilfe in der Lösung
- Homogenisierung des Ansatzes in einer Kugelmühle (20 h Mischzeit)
- Feststoffgehalt des Schlickers 40 Gew.-%

### Granulatherstellung:

- Entfernen des Lösungsmittels im Rotationsverdampfer bei T = 20 °C und p =200 mbar
- Restfeuchtigkeit < 1 %
- Granulieren durch Mörsern und Sieben des Rückstandes bis zu einem Korndurchmesser < 0,3 mm

### B. Siliciumcarbid-Keramik

### Formgebung durch uniaxiales Pressen: (Herstellung von Probestäben mit Abmessung 56 mm x 5 mm x 7 mm)

- Werkzeugtemperatur: 70 °C
- Preßvorgänge:
   - 1. und 2. Preßvorgang: 200 MPa,
   1 min Haltezeit;
   - 3. Preßvorgang: 300 MPa,
   1 min Haltezeit;
- Eigenschaften der Grünkörper
   - Dichte:: 68 % der theoretischen Dichte (TD)

### Erste Temperaturbehandlung (Pyrolyse):

- - Aufheizgeschwindigkeit: : 100 °C/h
- - Endtemperatur: : 1450 °C
- - Haltezeit bei Endtemperatur: : 1 h
- - Gasatmosphäre: : Ar, N₂
- - Abkühlgeschwindigkeit: : 250 °C/h
- - Eigenschaften der pyrolysierten Formkörper:
- Dichte: : 60 % TD
- keramische Ausbeute des Binders: : 17 %

### Zweite Temperaturbehandlung (druckloses Sintern):

- - Endtemperatur: : 2080 °C
- - Haltezeit bei Endtemperatur: : 1 h
- - Gasatmosphäre: : Ar, N₂
- - Eigenschaften des drucklos gesinterten Formkörpers:
- Dichte: : 98 % TD
- E-Modul: : 426 GPa
- 4-Punkt-Biegebruchfestigkeit: : 360 MPa

( bei Raumtemperatur nach DIN 51110, Teil 1)
- Weibull-Modul: : 14

### Beispiel 2

### A. Siliciumcarbid-Granulat

### Schlickerzusammensetzung:

| | | |
|---|---|---|
| - Siliciumcarbid | ultrafeines α-SiC (15 m²/g) | 80,0 Gew.-% |
| - Bindemittel | Poly(phenyl-co-diphenyl)borcarbosilan | 20,0 Gew.-% |
| - Sinterhilfsmittel | --- | --- |

### Schlickervorbereitung:

- Feststoffgehalt des Schlickers 40 Gew.-%
- Lösen des Binders in Chloroform
- Dispergieren des SiC-Pulvers in der Lösung
- Homogenisierung des Ansatzes in einer Kugelmühle (20 h Mischzeit)

### Granulatherstellung:

- Entfernen des Lösungsmittels im Rotationsverdampfer bei T = 20 °C und p = 200 mbar
- Restfeuchtigkeit < 1 %
- Granulieren durch Mörsern und Sieben des Rückstandes bis zu einem Korndurchmesser < 0,3 mm

### B. Siliciumcarbid-Keramik

### Formgebung durch uniaxiales Pressen: (Herstellung von Probestäben mit Abmessung 56 mm x 5 mm x 7 mm)

- Werkzeugtemperatur: 70 °C
- Preßvorgänge:
   - 1. und 2. Preßvorgang: 200 MPa,
   1 min Haltezeit;
   - 3. Preßvorgang: 300 MPa,
   1 min Haltezeit;
- Eigenschaften der Grünkörper
   - Dichte:: 70 % der theoretischen Dichte (TD)

### Erste Temperaturbehandlung (Pyrolyse):

- - Aufheizgeschwindigkeit: : 100 °C/h
- - Endtemperatur: : 1450 °C
- - Haltezeit bei Endtemperatur: : 1 h
- - Gasatmosphäre: : Ar, N₂
- - Abkühlgeschwindigkeit: : 250 °C/h
- - Eigenschaften der pyrolysierten Formkörper:
- Dichte: : 61 % TD
- keramische Ausbeute des Binders: : 15 %

### Zweite Temperaturbehandlung (druckloses Sintern):

- - Endtemperatur: : 2080 °C
- - Haltezeit bei Endtemperatur: : 1 h
- - Gasatmosphäre: : Ar, N₂
- - Eigenschaften des drucklos gesinterten Formkörpers:
- Dichte: : 99 % TD
- E-Modul: : 431 GPa
- 4-Punkt-Biegebruchfestigkeit: : 347 MPa (nach DIN 51110, Teil 1 bei Raumtemperatur)
- Weibull-Modul: : 6

### Gefügestruktur:

- globulare Struktur
- Porositätsrate von 0 bis 2 %
- d_{arith.} = 5 bis 10 µm

### Beispiel 3

### A. Siliciumcarbid-Granulat

### Schlickerzusammensetzung:

| | | |
|---|---|---|
| - Siliciumcarbid | ultrafeines α-SiC (15 m²/g) | 79,4 Gew.-% |
| - Bindemittel | Polydiphenylcarbosilan | 20,0 Gew.-% |
| - Sinterhilfsmittel | Bor (elementar) | 0,6 Gew.-% |

### Schlickervorbereitung:

- Feststoffgehalt des Schlickers 30 bis 40 Gew.-%
- Lösen des Binders in Chloroform
- Dispergieren des SiC-Pulvers und der Sinterhilfe in der Lösung
- Homogenisierung des Ansatzes in einer Kugelmühle (20 h Mischzeit)

### Granulatherstellung durch Sprühtrocknung:

- Parametereinstellung am Sprühtrockner (Minispray Fa. Büchi)

| | |
|---|---|
| Eintrittstemperatur | 75 bis 90 °C |
| Austrittstemperatur | 45 bis 60 °C |
| Sprühflow | 400 bis 800 Nl/h |
| Aspiratoreinstellung | 7 bis 20 |
| Pumpeinstellung | 5 bis 15 |

- Restfeuchtigkeit des Granulats < 2 Gew.-%

### B. Siliciumcarbid-Keramik

### Formgebung durch uniaxiales Pressen: (Herstellung von Probestäben mit Abmessung 56 mm x 5 mm x 7 mm)

- Werkzeugtemperatur: 20 °C
- Preßvorgänge:
   - 1. und 2. Preßvorgang: 200 MPa,
   1 min Haltezeit;
   - 3. Preßvorgang: 300 MPa,
   1 min Haltezeit;
- Eigenschaften der Grünkörper
   - Dichte:: 62 % der theoretischen Dichte (TD)

### Erste Temperaturbehandlung (Pyrolyse):

- - Aufheizgeschwindigkeit: : 100 °C/h
- - Endtemperatur: : 1450 °C
- - Haltezeit bei Endtemperatur: : 1 h
- - Gasatmosphäre: : Ar, N₂
- - Abkühlgeschwindigkeit: : 250 °C/h
- - Eigenschaften der pyrolysierten Formkörper:
- Dichte: : 54 % TD
- keramische Ausbeute des Binders: : 16 %

### Zweite Temperaturbehandlung (druckloses Sintern):

- - Endtemperatur: : 2080 °C
- - Haltezeit bei Endtemperatur: : 1 h
- - Gasatmosphäre: : Ar, N₂
- - Eigenschaften des drucklos gesinterten Formkörpers:
- Dichte: : 97 % TD
- E-Modul: : 414 GPa
- 4-Punkt-Biegebruchfestigkeit: : 435 MPa (bei Raumtemperatur nach DIN 51110, Teil 1)
- Weibull-Modul: : 8

### Beispiel 4

### A. Siliciumcarbidgranulat

Beispiel 3 wurde unter Verwendung von Poly(diphenyl-co-dimethyl)carbosilan 4:1:5 wiederholt.

### B. Siliciumcarbid-Keramik

Formgebung und Temperaturbehandlung erfolgten wie in 3B.

| | |
|---|---|
| Weibull-Modul: | 21 |
| 4-Punkt-Biegebruchfestigkeit: | 370 MPa |

### Beispiel 5

### Herstellung des Granulats in der Wirbelschicht

Zunächst wurde eine Dispersion von 2,95 kg direkt synthetisiertem Polydiphenylcarbosilan, 11,65 kg SiC (Produkt UF 15^{R}, Lonza) und 0,112 kg Borcarbid B₄C in 10,30 kg Xylol erzeugt.
In einem Wirbelschichttrockner wurden 0,618 kg Granulat als Keimbildner eingebracht und die Dispersion eingesprüht.
Die Einlaß-Temperatur der Trocknungsluft betrug etwa 90 °C, die Auslaßtemperatur 55 °C, die Produkttemperatur etwa 65 °C.
Es wurden 6,7 kg Kondensat, 10,3 kg Granulat und 1,85 kg Filterstaub gewonnen.
Die Restfeuchte nach Frischlufttrocknung betrug 0,2 %, nach Kreislauftrocknung 0,4 %, bezogen auf das Granulat.
Die Siebanalyse ergab folgende Werte:

| | |
|---|---|
| > 630 µm | 1,1 % |
| 630-400 µm | 6,0 % |
| 400-200 µm | 36,2 % |
| 200- 90 µm | 31,9 % |
| < 90 µm | 24,8 % |

## Patentansprüche

1. Granulat auf Basis von Siliciumcarbidpulver, welches im wesentlichen zusammengesetzt ist aus den homogen im Granulat verteilten Bestandteilen
(a) 67 bis 95 Gew.-%, SiC-Pulver,
(b) 3 bis 30 Gew.-% eines Bindemittels auf Basis
(b1) eines direkt synthetisierten Polycarbosilans oder Polycarbosilan-Gemisches und/oder
(b2) eines direkt synthetisierten Polyborcarbosilans oder Polyborcarbosilan-Gemisches,
wobei im Bindemittel wenigstens 20 Mol-% der Carbosilan-Substituenten Phenyl-Substituenten sind und im Falle von Polyborcarbosilan enthaltenden Bindemitteln der Anteil des Polyborcarbosilans so bemessen ist, daß der Gehalt an Bor im Granulat 0,1 bis 3,0 Gew.-%, vorzugsweise 0,2 bis 1,0 Gew.-% beträgt, und
(c) 0 bis 3,0 Gew.-% eines sauerstofffreien Sinterhilfsmittels.

2. Granulat nach Anspruch 1, dadurch gekennzeichnet, daß die Granulatkörner einen Korndurchmesser kleiner 0,6 mm besitzen.

3. Granulat nach einem der vorhergehenden Ansprüche, dadurch gekennzeichnet, daß das SiC-Pulver im wesentlichen aus α-SiC besteht.

4. Granulat nach Anspruch 3, dadurch gekennzeichnet, daß das α-SiC-Pulver eine spezifische Oberfläche von 10 bis 20 m²/g gemessen nach BET besitzt.

5. Granulat nach einem der vorhergehenden Ansprüche, dadurch gekennzeichnet, daß wenigstens 65 Mol-%, vorzugsweise wenigstens 70 Mol-% der Carbosilan-Substituenten im Bindemittel Phenyl-Substituenten sind.

6. Granulat nach einem der vorhergehenden Ansprüche, dadurch gekennzeichnet, daß die Polycarbosilane des Bindemittels im wesentlichen ein Gerüst aus den Struktureinheiten der Formeln besitzen 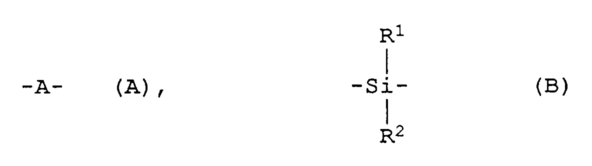 worin R¹ und/oder R² für Wasserstoff, Alkyl, Cycloalkyl oder Phenyl stehen und A für einen Alkylenrest mit 1 bis 6 C-Atomen steht, wobei die Struktureinheiten der Formeln (A) und (B) im Verhältnis von etwa 1:1 im Polycarbosilan vorliegen.

7. Granulat nach einem der vorhergehenden Ansprüche, dadurch gekennzeichnet, daß die Polycarbosilane des Bindemittels im wesentlichen ein Gerüst aus einer Kombination der Struktureinheiten I und II, aus einer Kombination der Struktureinheit I mit II und mit III und/oder IV, aus einer Kombination der Struktureinheiten I und III mit IV oder aus Kombination der Struktureinheit I und der Struktureinheit IV 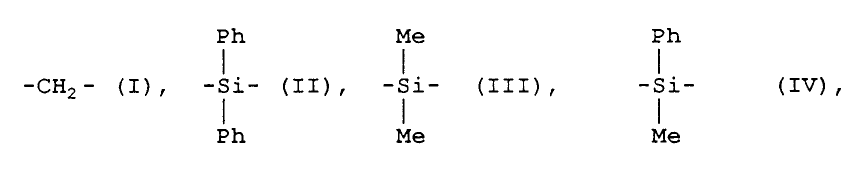 worin der Si-Substituent Ph für Phenyl und der Si-Substituent Me für Methyl steht, besitzen, wobei das Verhältnis der Struktureinheiten (I):(II) + (III) + (IV) etwa 1:1 beträgt.

8. Granulat nach Anspruch 7, dadurch gekennzeichnet, daß die Polycarbosilane des Bindemittels im wesentlichen ein Gerüst aus einer Kombination der Struktureinheiten I und II oder aus einer Kombination der Struktureinheiten I und II mit III besitzen.

9. Granulat nach Anspruch 8, dadurch gekennzeichnet, daß das Polycarbosilan mit dem Gerüst aus der Kombination der Struktureinheiten I und II ein Polydiphenylcarbosilan und das Polycarbosilan mit dem Gerüst aus der Kombination der Struktureinheiten I und II mit III ein Poly(diphenyl-co-dimethyl)carbosilan ist.

10. Granulat nach einem der vorhergehenden Ansprüche, dadurch gekennzeichnet, daß die Polyborcarbosilane des Bindemittels im wesentlichen ein Gerüst besitzen aus den Struktureinheiten der Formeln 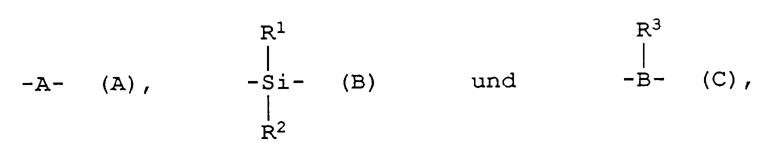 worin R¹ und/oder R² für Wasserstoff, Alkyl, Cycloalkyl oder Phenyl stehen, R³ für einen Niederalkylrest mit 1 bis 4 C-Atomen oder Phenyl steht und A für einen Alkylenrest mit 1 bis 6 C-Atomen, vorzugsweise -CH₂- steht, wobei das Verhältnis der Struktureinheiten (A):(B) + (C) etwa 1:1 beträgt.

11. Granulat nach Anspruch 10, dadurch gekennzeichnet, daß das Polyborcarbosilan ein Poly(phenyl-co-diphenyl)borcarbosilan ist.

12. Granulat nach einem der vorhergehenden Ansprüche, gekennzeichnet durch
(a) 70 bis 95 Gew.-%, vorzugsweise 80 bis 90 Gew.-% SiC-Pulver und
(b) 5 bis 30 Gew.-%, vorzugsweise 10 bis 20 Gew.-% des Bindemittels auf Basis von Polyborcarbosilan gemäß
(b2) oder von Gemischen aus Polycarbosilan gemäß
(b1) und Polyborcarbosilan gemäß (b2).

13. Granulat nach einem der Ansprüche 1 bis 11, gekennzeichnet durch
(a) 69,0 bis 94,9 Gew.-%, vorzugsweise
79,2 bis 89,6 Gew.-% SiC-Pulver,
(b) 5 bis 30 Gew.-%, vorzugsweise
10 bis 20 Gew.-% des Bindemittels auf Basis von Polycarbosilan gemäß (b1) und
(c) 0,1 bis 1,0 Gew.-%, vorzugsweise
0,4 bis 0,8 Gew.-% Sinterhilfsmittel.

14. Granulat nach einem der Ansprüche 1 bis 11 und 13, dadurch gekennzeichnet, daß das Sinterhilfsmittel ein Bor-haltiges Sinterhilfsmittel aus der Gruppe elementares Bor und Borcarbid, vorzugsweise Borcarbid ist.

15. Verfahren zur Herstellung von Granulaten auf Basis von Siliciumcarbidpulver gemäß einem der Ansprüche 1 bis 14, dadurch gekennzeichnet, daß man die Granulatbestandteile (a) SiC-Pulver, (b) Polycarbosilan-Bindemittel und gegebenenfalls (c) Sinterhilfsmittel in einem organischen Lösungsmittel, vorzugsweise in Chloroform, Toluol oder Xylol, gegebenenfalls unter Zusatz von Dispergierhilfsmittel mischt, das erhaltene Gemisch homogenisiert und abschließend das Lösungsmittel unter Bildung des Granulates durch Abdampfen unter gleichzeitiger Abrollbewegung, Aufbaugranulation, Wirbelschichttrocknung oder durch Sprühtrocknung entfernt.

16. Drucklos gesinterte Siliciumcarbid-Keramik, gekennzeichnet durch folgende Gefügestruktur:
- globulare Struktur,
- Porositätsrate von 0 bis 2%,
- d_{arith.} = 5 bis 10 µm.

17. Drucklos gesinterte Siliciumcarbid-Keramik, gekennzeichnet durch eine Vierpunkt-Biegebruchfestigkeit von wenigstens 420 MPa und ein Weibull-Modul von wenigstens 6, vorzugsweise von wenigstens 10.

18. Drucklos gesinterte Siliciumcarbid-Keramik, gekennzeichnet durch eine Vierpunkt-Biegebruchfestigkeit von wenigstens 350 MPa und ein Weibull-Modul von wenigstens 10, vorzugsweise von wenigstens 14.

19. Siliciumcarbid-Keramik nach einem der Ansprüche 16 bis 18, gekennzeichnet durch einen K_{Ic}-Faktor von wenigstens 3,2 PMam^{1/2}, vorzugsweise von wenigstens 4,2 PMam^{1/2}.
